Europäisches Patentamt

(19) European Patent Office

Office européen des brevets

(11) Publication number: **0 091 834**
**B1**

(12) **EUROPEAN PATENT SPECIFICATION**

(45) Date of publication of patent specification: **23.07.86**

(21) Application number: **83302088.6**

(22) Date of filing: **13.04.83**

(51) Int. Cl.⁴: **B 23 K 37/00**

(54) Scarfing method and apparatus.

(30) Priority: **13.04.82 US 368059**

(43) Date of publication of application:
**19.10.83 Bulletin 83/42**

(45) Publication of the grant of the patent:
**23.07.86 Bulletin 86/30**

(84) Designated Contracting States:
**FR GB IT**

(56) References cited:
**DE-A-1 527 653**
**DE-B-2 511 004**
**DE-C- 907 285**
**US-A-2 009 670**
**US-A-3 269 248**
**US-A-3 597 958**

(73) Proprietor: **FOSTER WHEELER ENERGY
CORPORATION
110 South Orange Avenue
Livingston New Jersey 07039 (US)**

(72) Inventor: **Bonner, Stanley V.
110 South Orange Avenue
Livingston New Jersey 07039 (US)**
Inventor: **Baumann, Frederick F.
110 South Orange Avenue
Livingston New Jersey 07039 (US)**

(74) Representative: **Bowman, Paul Alan et al
LLOYD WISE, TREGEAR & CO. Norman House
105-109 Strand
London WC2R 0AE (GB)**

Courier Press, Leamington Spa, England.

## Description

In the longitudinal joining of two members by welding, or two longitudinal edges of one member as in the manufacture of tubing, an excess of weld material is usually deposited at the weld. Such elongated welds are produced, for example, in the joining of fins to tubes for incorporation into heat transfer devices, like the walls of boilers. Typically, two fins are welded to each tube, with a weld placed on each side of the fin, at the juncture of each fin with the tube. Since four welds are used on each tube and since the tubes are many metres long, a considerable amount of excess weld is deposited.

Heretofore, excess weld has been removed or scarfed by hand tools, which is time consuming, expensive and imprecise, or by mechanical means in which the cutting tools, or tools, is preset and operationally fixed in position during the removal of the weld. Such an arrangement is to be found, for example, in U.S. 2,009,670 wherein a short work-piece such as a tube 13 is mounted on a ram 6 and by means of a linear movement of the latter is drawn between two opposed fixed cutters 21.

The present invention seeks to provide a scarfing process which is continuous and fast and which can remove excess weld precisely, and to provide apparatus therefor. According to the invention, the article bearing the elongate weld is moved relative to a scarfing element which engages the weld to remove excess material therefrom, and the lateral position of the scarfing element with respect to the article is controlled by a sensing mechanism and a fluid cylinder operable in response thereto. Typically, the sensing mechanism comprises a roller which engages the article and a member connected thereto which operates a control valve for the cylinder. The available movement of the sensing mechanism and the scarfing element is normally confined to parallel areas generally perpendicular to the direction of the relative movement between the scarfing element and article as the scarfing proceeds. Thus, the invention enables changes in the position of the welds to be sensed and the scarfing apparatus to be adjusted accordingly.

In the case where the article to be scarfed is a finned tube the sensing mechanism may engage either the free edges of fins welded to the tube or the tube itself to determine the position of the weld as the tube is moved in its axial direction. The sensing elements can engage the styli or control stems of respective tracer control valves, which control the flow of pressure fluid to pressure fluid cylinders. The pressure fluid cylinders are connected to cutters, to incrementally move the cutters toward and away from the tube in accordance with the determination of the sensing elements, so that the thickness of the weld is precisely controlled and the excess weld material is removed.

The invention will now be described by way of example and with reference to the accompanying drawing wherein:—

Figure 1 is a plan view of the scarfing apparatus according to the present invention; and

Figure 2 is an enlarged cross section of the roller slider member and tracer control valve of Figure 1, showing schematically their internal operation.

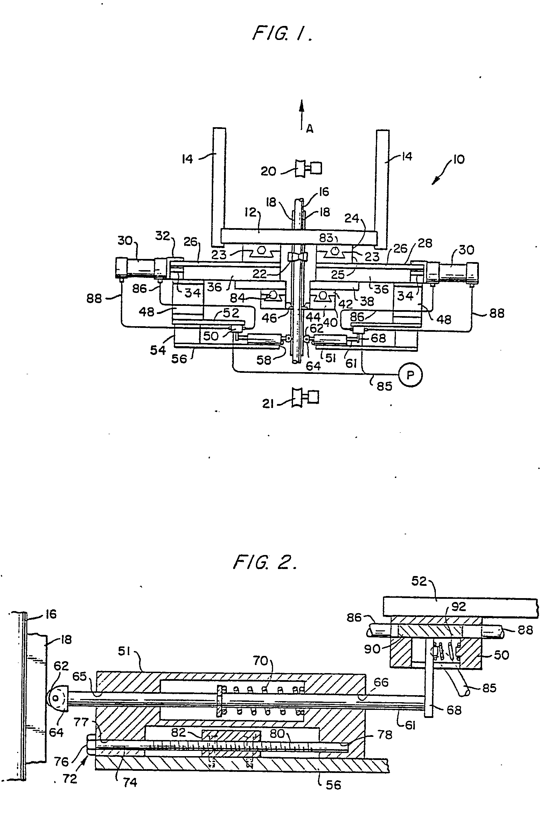

The scarfing apparatus illustrated in Figure 1, is designated generally by the reference numeral 10, and includes a vertically oriented mounting plate 12 which is stabilized by a pair of stabilizing panels 14 past which is moved the article to be scarfed, which in Figure 1, is shown to be a boiler tube 16 having a fin 18 welded to each of the opposite lateral sides thereof. The tube 16 with the fins 18 is drawn from a welding area, in the direction of the arrow A of Figure 1, by any suitable means, such as by pairs of frictionally engaging drive rollers 20 and 21, one roller of each of which is shown in Figure 1.

A pair of stabilizing rollers 22 are provided adjacent to the support plate 12 and may be mounted on the support plate, one above the tube 16 and one below the tube to guide the travel of the tube as it is drawn through the scarfing apparatus by the drawing means.

A pair of horizontally spaced, vertically oriented slides 23 is secured to the side of the mounting plate 12 which is upstream with respect to the direction of travel of the tube 16. Each slide 23 includes a base 24 which is attached to the mounting plate 12 and a saddle 25 which mates with the base 24 in a dovetail relationship and which slides relative thereto. The entire remainder of the scarfing apparatus 10 is mounted on the saddles 25 of the slides 23. Mounted to each saddle 25 and extending laterally therefrom is a base 26 of a horizontally disposed slide 28. At the lateral ends of each base 26 is mounted at fluid pressure cylinder 30, such as a hydraulic cylinder or a compressed air cylinder. The cylinders 30 are mounted on the base 26 by means of an L-shaped member 32 welded to the base 26 or attached by fasteners or by any other suitable means. Each fluid pressure cylinder 30 is a conventional cylinder, such as a hydraulic cylinder of the double-acting type having a pressure fluid inlet at each end, for moving a piston incrementally in either direction in the cylinder. Each piston includes an extending elongated element, such as a piston rod 34, which engages the lateral end of a saddle 36 of the slide 28 so that, as the piston moves in the cylinder 30, the associated saddle 36 moves with respect to its base 26.

A support plate 38 is mounted near the end of the saddle 36 adjacent the tube 16, and a vertical dovetail slide 40 is mounted at the inner end of each support plate 38, each slide 40 having a base 42 which is attached to the support plate 38 and a saddle 44 which moves up and down relative to the base 42. On the side of each saddle 44 facing the tube 16 is a cutter 46, each cutter having two cutting elements, one cutting element for removing the excess weld or flash from the weld above the juncture of the tube 16 and the fin 18 and the other cutting element for the weld below the juncture. The cutting elements can be blades suitably shaped and angled to provide the desired weld, or they can be abrasive wheels or other devices.

A pair of spacer elements 48 are mounted at the lateral ends of the saddles 36 for supporting tracer control valves 50 and sensing element support members 51 upstream from the cutters 46. Each tracer control valve 50 is adjustably mounted at the inner end of a base 52 of a horizontally oriented dovetail slide, which is in turn mounted at the upstream end of each spacer element 48. An auxiliary spacer element 54 defines a saddle which mates with the base 52 and extends upstream from the base 52 to support a plate 56 which extends toward the tube 16 and defines at its inner end the saddle of a dovetail slide 58. A mating base is defined on the sensing element support member 51 which receives a tail member 61 connected to a sensing element such as a roller 62, which engages either the free edge of the fin 18 or a lateral surface of the tube 16 in order to determine variations in the position of the welds. Variations in the positions in the welds are primarily due to variations in the wall of the tube 16, thereby making it possible to detect changes in the welds by engaging the tube walls with the rollers 62. However, since the width of the fins 18 can be precisely controlled, variations in the lateral position of the fins 18 when they are welded to the tube 16 is due to variations in the wall of the tube 16, and so the positions of the welds can be determined by engaging the rollers 62 with the free edges of the fins 18, as is shown in Figures 1 and 2.

As is best illustrated in Figure 2, each roller 62 is mounted in a head 64 which is mounted on the inner end of the tail member 61. The tail member 61, which preferably comprises a rod, passes through bores 65 and 66 in the sensing element support member 51 to engage an operating stem 68 or stylus of the tracer control valve 50, and a spring 70 is provided to bias the roller 62 into engagement with the fin 18.

An adjustment mechanism 72 is provided to adjust the starting position of the sensing element support member 51 so that various sizes of tubes 16 and fins 18 can be accommodated. The adjustment mechanism includes an elongated rod 74 having a hexagonal head 76 and extending through bores 77 and 78 in the sensing element support member 51 which are parallel to the tail member 61. The elongated rod 74 has a threaded central section 80 which engages with threads formed in a bore extending through a block 82 secured to the plate 56 by screws or other suitable means. Thus, rotation of the hexagonal head 76 results in movement of the sensing element support member 51 with respect to the plate 56 to adjust its starting position of the sensing element support member 51. Similar adjustment mechanisms 83 and 84 are provided for the slides 23 and 40, respectively, and similar adjustment mechanisms are provided for the tracer control valves 50. By manipulating the adjustment mechanisms 83 and 84, the sensing element support members 51 and the cutters 46 are adjustable in a direction perpendicular to the welds and perpendicular to the movement of the cutters 46 by the piston rods 34.

Each tracer control valve 50 includes an inlet line 85 connected to a source of pressure fluid such as a pump P, a line 86 extending to the inner end of the pressure fluid cylinder 30 and a line 88 extending to the lateral end of the pressure fluid cylinder 30. A schematic representation of the internal mechanism of the tracer control valve 50 includes a piston 90 connected to the operating stem 68 and operable to control the flow of pressure fluid from the inlet line 85 to the lines 86 and 88. A spring 92 is provided to bias the operating stem 68 into engagement with the tail member 61.

In operation, the slides 23 and 40 are adjusted so that the cutters 46 and the rollers 62 are at the proper level to engage the tube 16. The sensing element support member 51 and the tracer control valve 50 are also adjusted to provide a space of proper width between the rollers 62 to accommodate the tube 16 and fins 18. The tube 16 with the fins 18 welded thereto is drawn from a welding area upstream of the scarfing apparatus by the drive rollers 20 and 21 into engagement with rollers 62 and the cutters 46. The springs 70 bias the rollers 62 into engagement with the free edges of the fins 18, and the springs 92 bias the operating stems 68 of the tracer control valves 50 into engagement with the tail members 61. If the positions of welds vary as the tube 16 passes through the scarfing apparatus, the positions of the free edges of the fins 18 vary correspondingly and the rollers 62 move as a result of the variations. The movement of the rollers 62 is transmitted to the operating stems 68 of the tracer control valves 50 through the tail members 61. If a roller 62 moves laterally, the piston 90 of the associated tracer control valve 50 moves laterally to allow the flow of pressure fluid or additional pressure fluid from the inlet line 85 to the line 86. Such a flow causes the piston in the associated fluid pressure cylinder 30 to move laterally incrementally in an amount corresponding to the amount of change in the position of the weld. This movement is transmitted to the cutters 46 through the piston rod 34, the saddle 36 of the slide 28, the support plate 38 and the slide 40. Thus, the cutters 46 are moved laterally by an amount equal to the amount of variance in the position of the weld, thereby providing a weld of uniform thickness while removing excess weld material.

**Claims**

1. Apparatus for removing excess weld material from an article (16, 18) having an elongate weld comprising means (20, 21) for moving a said article (16, 18) in a direction parallel to the weld relative to a scarfing element (46) for engaging the weld to remove excess weld material therefrom, characterised in that

a fluid pressure cylinder (30) is connected to the scarfing element (46) for moving the scarfing element (46) into engagement with the weld; and

sensing means (51, 62) engageable with the article, are provided for determining the position of the weld, which sensing means (51, 62) are operatively coupled to fluid pressure control means (50) for actuating the fluid cylinder (30) to move the scarfing element (46) into engagement with the weld in accordance with the determination by the sensing means (51, 62) of the position of the weld.

2. Apparatus according to Claim 1 characterised in that the fluid pressure cylinder (30) is an hydraulic cylinder.

3. Apparatus according to Claim 1 or Claim 2 characterised in that the scarfing element (46) is mounted on an element (36) slidable toward and away from the weld, the fluid pressure cylinder (30) being operatively connected to the slidable element (36).

4. Apparatus according to any preceding Claim, characterised in that the fluid pressure control means (50) is a valve, having a control element (90) in fluid communication with the fluid pressure cylinder (30).

5. Apparatus according to Claim 4, characterised in that the sensing means includes a roller (62) engageable with the article, a spring (70) biasing the roller (62) into engagement with the article, and a member (61) connected to the roller (62) engaging the control element (90) of the valve (50).

6. Apparatus according to any preceding Claim, characterised in that the control means (50) and the sensing means (51, 62) are separately adjustable toward and away from the article.

7. Apparatus according to Claim 6, characterised in that the sensing means (51, 62) and the cutter (46) are adjustable in a direction perpendicular to the weld and perpendicular to the movement of the scarfing element (46).

8. Apparatus according to any preceding Claim for removing excess weld material from opposite sides of an article, characterised in that sensing means (51, 62) and a scarfing element (46) are provided for simultaneous engagement with such opposite sides of a said article.

9. A method of removing excess weld material from an article having an elongated weld comprising moving the article (16, 18) in a direction parallel to the elongated weld relative to a scarfing element (46) which engages the weld to remove excess material therefrom, characterised by the steps of:

sensing variations in the position of the weld as the article (16, 18) moves; operating a fluid control valve (50) in response to such sensing to move a piston in fluid pressure cylinder (30) a distance corresponding to the variations in its position; and coupling the scarfing element (46) to the piston to maintain its position against the weld whereby a weld of uniform thickness is produced and excess weld material is removed.

**Patentansprüche**

1. Vorrichtung zum Entfernen überschüssigen Schweißmaterials von einem Gegenstand (16, 18) mit einer langgestreckten Schweißnaht, mit einer Einrichtung (20, 21) zum Bewegen des Gegenstandes (16, 18) in einer zu der Schweißnaht parallelen Richtung relativ zu einem Entgratungselement (46), das an der Schweißnaht angreift, um überschüssiges Schweißmaterial von dieser zu entfernen, dadurch gekennzeichnet, daß ein Fluiddruckzylinder (30) mit dem Entgratungselement (46) verbunden ist, um das Entgratungselement (46) in Eingriff mit der Schweißnaht zu bewegen, und daß eine an dem Gegenstand angreifende Sensoreinrichtung (51, 62) vorgesehen ist, um die Position der Schweißnaht zu ermitteln, wobei die Sensoreinrichtung (51, 62) betriebsfähig mit einer Fluiddrucksteuereinrichtung (50) zur Betätigung des Fluidzylinders (30) verbunden ist, der das Entgratungselement (46) in Eingriff mit der Schweißnaht entsprechend der Ermittlung der Position der Schweißnaht durch die Sensoreinrichtung (51, 62) bewegt.

2. Vorrichtung nach Anspruch 1, dadurch gekennzeichnet, daß der Fluiddruckzylinder (30) ein Hydraulikzylinder ist.

3. Vorrichtung nach Anspruch 1 oder 2, dadurch gekennzeichnet, daß das Entgratungselement (46) an einem Bauteil (36) befestigt ist, das auf die Schweißnaht zu und von dieser weg verschiebbar ist, und daß der Fluiddruckzylinder (30) betriebsfähig mit dem verschiebbaren Bauteil (36) verbunden ist.

4. Vorrichtung nach einem der vorhergehenden Ansprüche, dadurch gekennzeichnet, daß die Fluiddrucksteuereinrichtung (50) ein Ventil ist, das ein Steuerelement (90) aufweist, das in Fluidverbindung mit dem Fluiddruckzylinder (30) steht.

5. Vorrichtung nach Anspruch 4, dadurch gekennzeichnet, daß die Sensoreinrichtung eine Rolle (62), die im Eingriff mit dem Gegenstand stehen kann, eine Feder (70), die die Rolle (62) in Anlage an den Gegenstand drückt, und ein mit der Rolle (62) verbundenes Bauteil (61) aufweist, das mit dem Steuerelement (90) des Ventils (50) in Eingriff steht.

6. Vorrichtung nach einem der vorhergehenden Ansprüche, dadurch gekennzeichnet, daß die Steuereinrichtung (50) und die Sensoreinrichtung (51, 62) getrennt in Richtung des Gegenstandes und von diesem weg einstellbar sind.

7. Vorrichtung nach Anspruch 6, dadurch gekennzeichnet, daß die Sensoreinrichtung (51, 62) und das Entgratungselement (46) in einer Richtung senkrecht zu der Schweißnaht und senkrecht zu der Bewegung des Entgratungselementes (46) einstellbar sind.

8. Vorrichtung nach einem der vorhergehenden Ansprüche zum Entfernen überflüssigen Schweißmaterials von gegenüberliegenden Seiten eines Gegenstandes, dadurch gekennzeichnet, daß eine Sensoreinrichtung (51, 62) und ein Entgratungselement (46) vorgesehen sind, um gleichzeitig an den entgegengesetzten Seiten des Gegenstandes anzugreifen.

9. Verfahren zum Entfernen überschüssigen Schweißmaterials von einem Gegenstand mit einer langgestreckten Schweißnaht, wobei der Gegenstand (16, 18) in zu der langgestreckten Schweißnaht paralleler Richtung relativ zu einem Entgratungselement (46) bewegt wird, das an der Schweißnaht angreift, um überschüssiges Material von dieser zu entfernen, gekennzeichnet durch folgende Schritte:

Abtasten von Veränderungen in der Position des Schweißnaht, wenn sich der Gegenstand (16, 18) fortbewegt, Betätigen eines Fluidsteuerventils (50) entsprechend dieses Abtastens, um einen Kolben in einem Fluiddruckzylinder (30) um eine Strecke zu bewegen, die den Veränderungen in ihrer Position entspricht und Koppeln des Entgratungselementes (46) mit dem Kolben, um seine Position gegen die Schweißnaht aufrecht zu erhalten, wodurch eine Schweißnaht von gleichmäßiger Dicke erzeugt und überschüssiges Schweißmaterial entfernt wird.

## Revendications

1. Appareil pour enlever du matériau de soudure en excès sur un objet (16, 18) comportant une soudure allongée, qui comprend des moyens (20, 21) permettant de déplacer ledit objet (16, 18) dans une direction parallèle à la soudure, par rapport à un élément d'ébavurage (46) destiné à venir en contact avec la soudure pour enlever le matériau de soudure en excès caractérisé en ce que

— un vérin (30) est relié à l'élément d'ébavurage (46) pour déplacer l'élément d'ébavurage (46) dans une position de contact avec la soudure; et

— des moyens de détection (51, 62), aptes à entrer en contact avec l'objet, sont prévus pour déterminer la position de la soudure, ces moyens de détection (51, 62) étant accouplés fonctionnellement à des moyens de commande de la pression de fluide (50) pour actionner le vérin (30) afin de déplacer l'élément d'ébavurage (46) et l'amener en contact avec la soudure en fonction de la détermination, par les moyens de détection (51, 62), de la position de la soudure.

2. Appareil selon la revendication 1, caractérisé en ce que le vérin (30) est un vérin hydraulique.

3. Appareil selon la revendication 1 ou la revendication 2, caractérisé en ce que l'élément d'ébavurage (46) est monté sur un élément (36) apte à coulisser pour s'approcher ou s'écarter de la soudure, le vérin (30) étant relié fonctionnellement à l'élément coulissant (36).

4. Appareil selon l'une quelconque des revendications précédentes, caractérisé en ce que les moyens de commande de la pression du fluide (50) sont constitués par une soupape comprenant un élément de commande (90) en communication par fluide avec le vérin (30).

5. Appareil selon la revendication 4, caractérisé en ce que les moyens de détection comprennent un galet (62) pouvant entrer en contact avec l'objet, un ressort (70) sollicitant le galet (62) dans une position de contact avec l'objet, et un organe (61) relié au galet (62) et venant en contact avec l'élément de commande (90) de la soupape (50).

6. Appareil selon l'une quelconque des revendications précédentes, caractérisé en ce que les moyens de commande (50) et les moyens de détection (51, 62) sont réglables séparément pour être rapprochés ou éloignés de l'objet.

7. Appareil selon la revendication 6, caractérisé en ce que les moyens de détection (51, 62) et le dispositif de coupe (46) sont réglables en position dans une direction perpendiculaire à la soudure et perpendiculaire au mouvement de l'élément d'ébavurage (46).

8. Appareil selon l'une quelconque des revendications précédentes, pour enlever du matériau de soudure en excès sur les côtés opposés d'un objet, caractérisé en ce que des moyens de détection (51, 62) et un élément d'ébavurage (46) sont prévus pour entrer simultanément en contact avec les côtés opposés dudit objet.

9. Procédé pour enlever du matériau de soudure en excès sur un objet comportant une soudure allongée, consistant à déplacer l'objet (16, 18) dans une direction parallèle à la soudure allongée par rapport à un élément d'ébavurage (46) qui entre en contact avec la soudure pour en enlever le matériau en excès, caractérisé par les étapes consistant:

à détecter des variations de la position de la soudure lors du déplacement de l'objet (16, 18); à actionner une soupape de commande de fluide (50) en réponse à cette détection, pour déplacer un piston d'un vérin (30) sur une distance correspondant aux variations de sa position; et à accoupler l'élément d'ébavurage (46) au piston pour maintenir sa position contre la soudure, afin d'obtenir une soudure d'épaisseur uniforme et d'enlever le matériau de soudure en excès.

FIG. 1.

FIG. 2.

1